Europäisches Patentamt

European Patent Office

Office européen des brevets

(11) Publication number: **0 041 261**
**A1**

(12) # EUROPEAN PATENT APPLICATION

(21) Application number: **81104176.3**

(22) Date of filing: **01.06.81**

(51) Int. Cl.³: **H 04 M 17/02**
**G 07 F 7/02, G 06 K 7/06**

(30) Priority: **02.06.80 IT 6785280**

(43) Date of publication of application:
**09.12.81 Bulletin 81/49**

(84) Designated Contracting States:
**AT BE CH DE FR GB LI NL SE**

(71) Applicant: **SIP Soc. Italiana per l'Esercizio Telefonico p.a.**
**Via San Dalmazzo, 15**
**I-10122 Turin(IT)**

(72) Inventor: **Semprini, Pio**
**Via dei Giuochi Istmici, 18**
**Roma(IT)**

(72) Inventor: **Balocco, Filippo**
**Via Bovio, 3**
**Torino(IT)**

(72) Inventor: **Caruso, Mariano**
**C.so Tassoni, 77**
**Torino(IT)**

(74) Representative: **Riederer Freiherr von Paar zu Schönau, Anton**
**Müllerstrasse 31**
**D-8000 München 5(DE)**

(54) Electronic-card prepayment telephone.

(57) Prepayment telephone employing electronic cards, consisting of programmable read-only memories (PROM), to be inserted into appropriate card drawers, which can be manually operated, and to be programmed cell by cell in a nonerasable way at each charge impulse. The telephone is provided with suitable means to avoid any counterfeiting.

FIG.1

Croydon Printing Company Ltd.

**0041261**

*Patentanwalt*

*Dipl.-Ing. Anton Freiherr* Riederer von Paar

Frhr. Riederer v. Paar, Müllerstr. 31, D-8000 München 5

Müllerstraße 31
D-8000 München 5

☎ München (089) 26 60 60
Telex 523 903 claim d
☂ claims München

Konten:
Bayerische Vereinsbank München 563 390 (BLZ 700 202 70)
Gemeindesparkasse Gauting 624 072 (BLZ 700 560 90)
Postscheckkonto München 1921 39-809 (BLZ 700 100 80)

SIP - Soc. Italiana
per L'Esercizio Telefonico p.a.
Via S. Dalmazzo, 15

I-10122 Turin, Italy

## ELECTRONIC-CARD PREPAYMENT TELEPHONE

### Description

The present invention relates to public prepayment telephones and more particularly it concerns a telephone operated by electronic cards.

With the introduction of automatic long-distance calls allowing people to be directly connected to national and international centres without operator's intervention, the development of public telephones ensuring that service is increasing.

Token or coin telephones used so far present however a number of disadvantages, as regards both their use and their managing. In fact, due to their limited storage capacity, in case of high metering rates a continuous token insertion is required by the user; said inconvenient, to be added to the difficulty of finding coins or tokens, gives rise to many troubles.

Furthermore these telephones require the frequent intervention of personnel for their maintenance and management. In fact coin or token boxes are to be emptied, token distributors are to be filled and are to be repaired or replaced in case of burglary attempts.

The card telephone overcomes these disadvantages as it does not require continuous coin insertion by the user, since it is sufficient to insert a card to dispose of a high number of credit units, for instance 100. Besides theft attempts are avoided because the card, which can be bought at any shop, is always returned at the end of the call, thus the telephone does not contain cash.

Among the various kinds of obliterable cards used in up-to-date public telephones there are magnetic cards, used also as identity cards, and holographic cards.

Nevertheless the two types of apparatuses using these cards present a number of disadvantages, such as complicated mechanical systems for reading the cards, using electric motors. Hence the telephone has to be equipped with a local power supply as it is highly power -consuming.

The above described disadvantages are overcome by the electronic-card prepayment telephone provided by the present invention, whose mechanical structure is simple and, consequently, cheap, reliable and easy to maintain; moreover, it does not require any local power supply.

It is a particular object of the present invention a prepayment telephone operated by electronic card consisting of a programmable and partly pre-programmed read-only memory with a security code, which comprises a housing, a handset, a telephone hook with switch, a keyboard, an electronic circuit and, in the front part of the housing, two manually-operated card-drawers designed to be rotated into closed position and therein blocked by appropriate mechanical means, in order to establish a reliable electrical contact between the card and the electronic circuit, that now can start four successive operation phases, effecting in the first the check of the security code, counting and displaying in the second the number of valid credit units and enabling the keyboard to dialling, effecting in the third the obliteration of the used credit units and checking in the fourth the obliteration occurred, while the cart recovery can be effected during the call once the card has been complitely obliterated or at the end of the call after a short time interval since the handset has been re-hooked, manually pressing a recovery push-button.

These and other characteristics of the present invention will be made clearer by the following description of a preferred embodiment thereof, given by way of example and not in a limiting sense, and by the annexed drawings in which:

- Fig. 1 is a perspective view of the exterior of a first way of embodiment of the telephone provided by the invention;

- Fig. 2 is a rear view of the mechanism-holder chassis;

- Fig. 3 is an exploded view of the main mechanisms of Fig. 2;

- Fig. 4 is a perspective view of the exterior of a second way of embodiment of the telephone;

- Fig. 5 is a perspective view of a card drawer;

- Fig. 6 is a rear view of the mechanism-holder chassis of the second telephone;

- Fig. 7 represents the block diagram of the electrical circuit of the telephone.

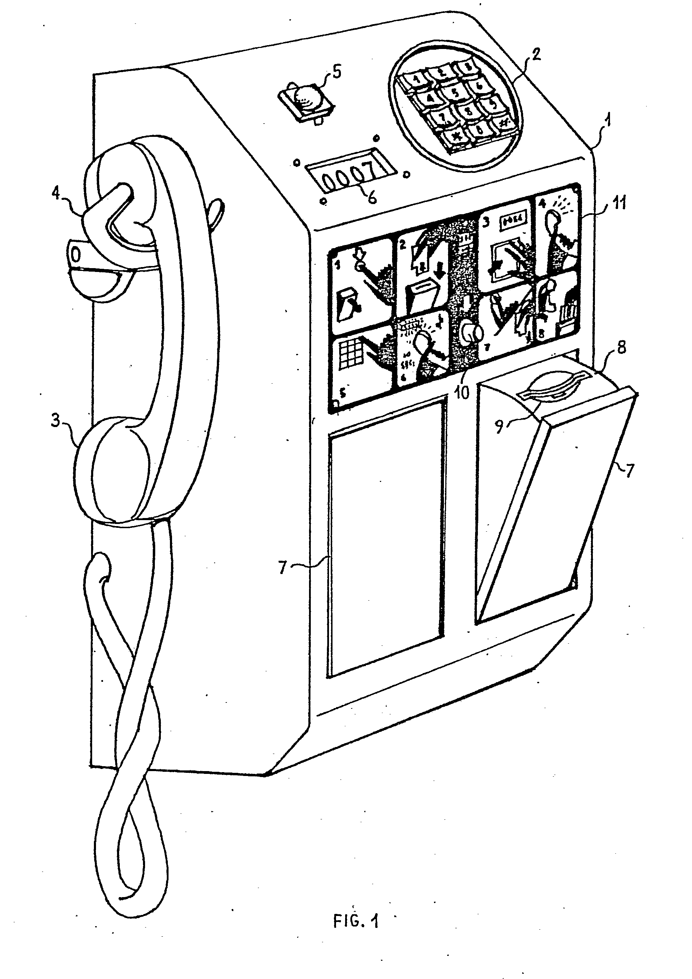

. In Fig. 1 reference 1 denotes the housing or case containing the circuits and the mechanical devices; reference 2 denotes the keyboard, reference 3 denotes the handset and reference 4 denotes the hook. Reference 5 denotes a warning light, whose function will be described later, and reference 6 denotes a 4-digit liquid-crystal display.

The latter gives the representation of the contents in cash or in credit units of the inserted electronic card, or the sum of the contents, where two cards at a time are inserted.

Reference 7 denotes two card drawers, one shown in the closed position and the other in the open position, so as to make visible the slot 8 into which the card can be inserted. At the centre of the slot there is a depression 9, apt to facilitate card recovery. The card is preferably rectangular-shaped and it presents dimensions which make it pocket-size and easy to handle.

Thickness of the card is also reduced as much as possible for greater convenience of the user.

Reference 10 denotes a push-button by which the drawer can be opened for recovering or inserting the card when the handset is on-hooked or, when it is off-hooked and the card is completely obliterated.

From what described it is clear that the telephone is manually operated, both for opening and closing the drawer; closure is obtained simply by pushing the open drawer.

Finally, 11 denotes a plate on which the instructions for the user are printed. These are preferably pictograms in order to avoid reading problems to foreigners or bad-sighted people.

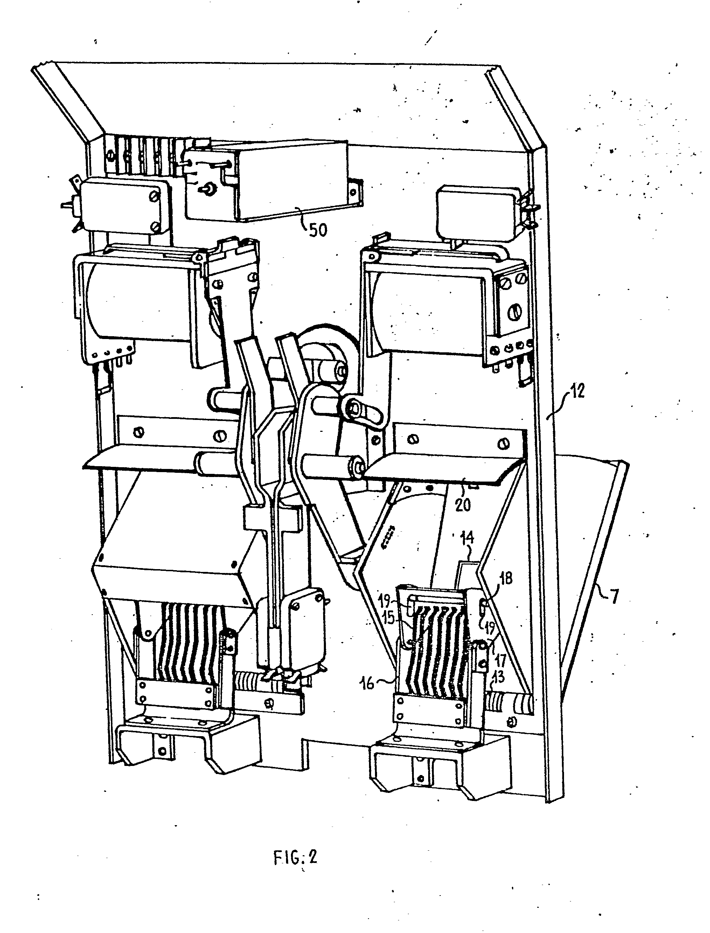

With reference to Fig. 2, reference 12 denotes a chassis onto which there are mounted the card drawers 7 and the set of levers, by which they are operated, as well as the necessary electric components.

The drawer is pivoted at the bottom to the chassis and is maintained normally open by a spring 13, wound around the pivot itself. The angle comprised between the closed and the open positions is such that an easy access to slot is allowed. The card has on one side a connector, internally connected to the electronic chip, consisting of seven metallic plates separated by an insulating edge.

Therefore the card must be inserted in a determined way into the slot, wherefrom sliding along a guide arrives in correspondance of a window 14.

Through the window, the card connector can be accessed by springs 15 of a connector 16, protected at the top by a mobile plate 17. On the closing of the drawer containing the card a rod 18 integral with the sides of the drawer itself sliding into slots 19 moves the mobile plate 17, allowing springs 15 to contact the card connector. To ensure a good electrical connection, during the closure of the drawer the springs are made to rub and press against the card connector: in this way dirt or oxide, if present, can be removed. During this rub the card is pushed upward, but its ejection from the drawer is prevented by a plate 20 integral with the chassis 12.

Finally reference 50 denotes a service electromechanical counter capable of totalizing the credit units obliterated by the telephone.

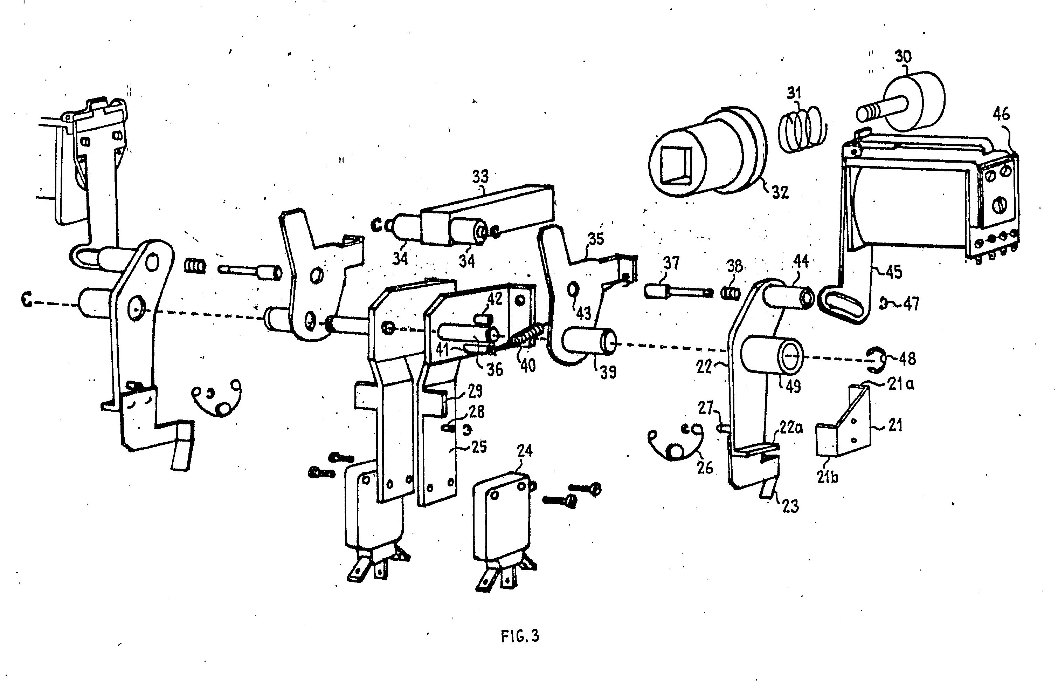

In Fig. 3 reference 21 denotes a c-shaped piece, with tongue 21a longer than the other tongue 21b. It is integral with the card drawer, to which it is laterally secured on the side nearer to the median part of chassis. The set of levers for opening the card drawers is housed in that part.

On closing the drawer, piece 21 describes an arc wherein tongue 21a meets the inferior part of tongue 22a of lever 22 causing the rotation of the same lever till when, being the drawer completely closed, tongue 22a leans on tongue 21b blocking the drawer in this position. When the rotation is over the appendix 23 actuates a microswitch 24, fixed to a support 25, in turn fixed to the chassis. In particular, in order to ensure the microswitch to be actuated only when the drawer is mechanically blocked by tongue 22a, electrical switching takes place in the last part of the travel of lever 22.

Mechanical pressure on the microswitch is strengthened by a toggle spring 26 secured to two pivots 27 and 28, integral with lever 22 and support 25 respectively.

The spring wound up during the first phase of closure of the drawer operates on the second, facilitating the travel of lever 22 till it meets tongue 29 of support 25, which in this case operates as a stop.

To open the drawers, the user presses push-button 30 that runs into bush 32, which houses the return spring 31.

Push-button 30 is secured to a rectangular-section bar 33, equipped at the end with two rolls 34, that, as a consequence of the pressure operated by the user, acts on lever 35. This lever is fixed to a bush 39, which allows it to rotate around a pivot 36 integral with an end of support 25.

Return spring 40 is secured on one side to pivot 41, integral with the support, and on the other side to a hole of lever 35. Spring 40 causes lever 35 to be normally leaned against a stopping pivot 42, having an eccentric axial hole for its correct positioning during the calibration of the telephone. In particular, the purpose of calibration is to cause a mobile pivot 37, designed to slide through a bush 44 fixed to lever 22, to be in correspondance with a hole 43 of lever 35, when released. Pivot 37 is operated by an electromagnet 46 by means of armature 45, having at the end a window lengthened to form a circumference arc.

A return spring 38 keeps pivot 37, connected to the armature by means of an open lock washer 47, protruding as much as possible outside bush 44. When the electromagnet 46 is energized, magnetic attraction wins the reaction of spring 38, attracting pivot 37 into bush 44.

At the same time lever 35 is disengaged with respect to lever 22, as mechanical connection between hole 43 and pivot 37 is absent.

Lever 22 can rotate around pivot 36 due to bush 49, having an axial hole of such a diameter that it contains bush 39 of lever 35. The two levers are kept in their position by open lock washer 48.

The action of the user on push-button 30, transferred to lever 35, is communicated to lever 22 by means of pivot 37, provided the electromagnet 46 is de-energized. Lever 22 rotates around pivot 36, causing tongue 22a to leave the top of tongue 21b and to push tongue 21a.

To card drawer, integral with piece 21, a force is therefore applied, which in conjunction with the force exerted by spring 13 (Fig. 2) will cause it to open.

If electromagnet 46 is energized, pivot 37 does not transfer the mechanical action to lever 22, consequently lever 35 effects idly its travel and returns to its rest position as effect of spring 40.

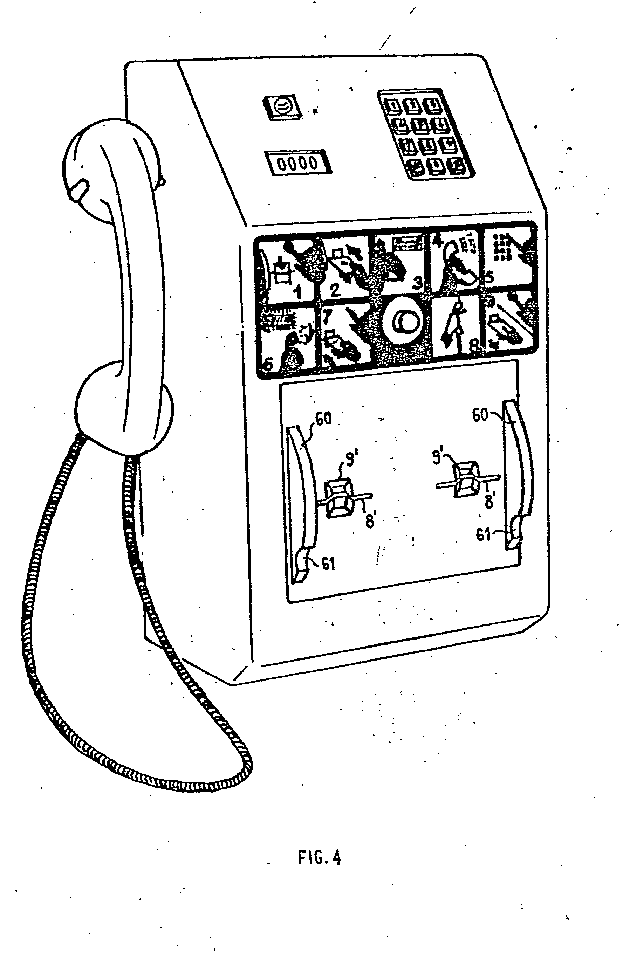

Fig. 4 is an exterior perspective view of a second example of embodiment thereof, which differs from the first basically in the shape and in open and closed positions of card drawers.

Indicating only the details which are different from those of the previous example, reference 8' denotes the access slots for the insertion of the cards, and reference 60 denotes two circular sectors with grooves 61, whereupon the user can operate to make them rotate upward to close the drawers.

The electronic card is inserted by keeping it in horizontal position with the connector facing down. In the extraction phase it can be easily recovered thanks to depression 9'.

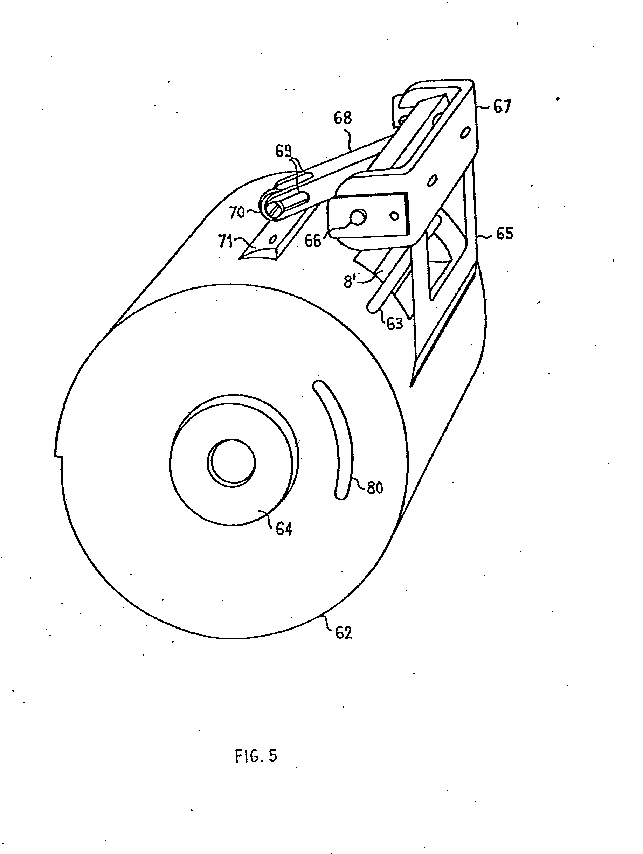

The second kind of card drawer is shown in Fig. 5, where it is denoted by reference 62.

It has basically the shape of a cylinder, on whose lateral surface a slot 8' parallel to the axis has been cut out for the insertion of the electronic card 63. Reference 64 denotes a flange by means of which the drawer is secured to the mechanism chassis and 65 denotes a wire-cutter blade capable of preventing attempts of fraudulent connection between the inside and outside through electrical wires.

Blade 65 can rotate around pivot 66, secured by a support 67 to the mechanism-holder chassis, and is integral with a lever 68, having at the end two adjusting slots 69, in which roll 70 is pivoted. When the drawer is being closed by means of a counter-clockwise rotation of some ten degrees, roll 70 encounters a prominence of the outer surface of the drawer. What causes a sudden lifting of level 68 and a corresponding lowering of the blade 65 towards the drawer, cutting off wires which may be outgoing from slot 8'. Reference 80 denotes a slot shaped as an arc of circumference, whose function will be examined hereinafter.

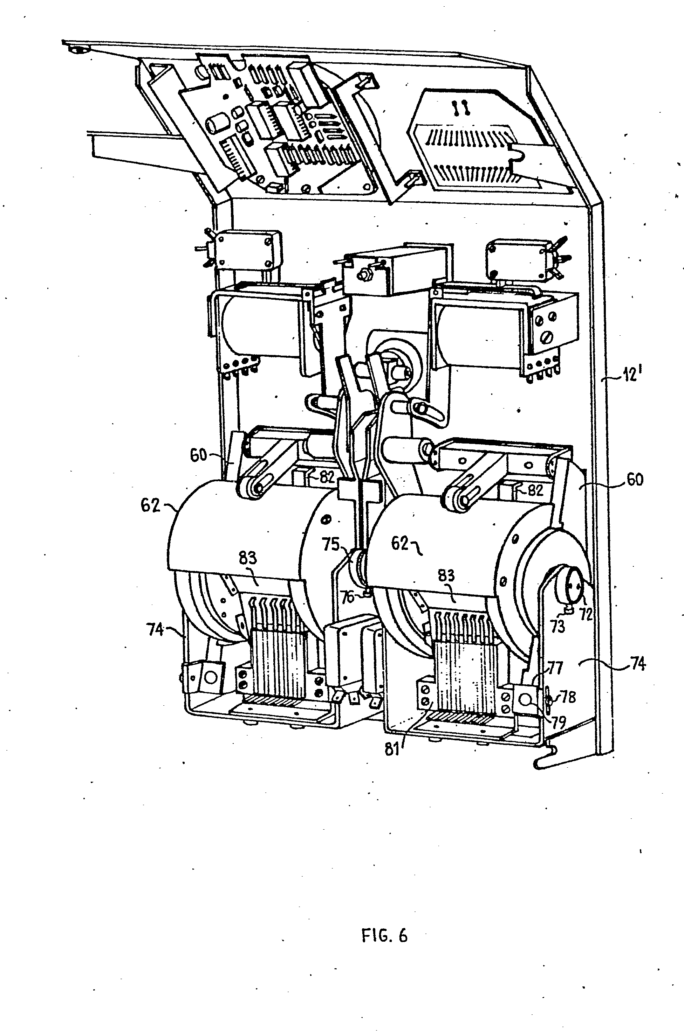

Fig. 6 is a rear view of the front panel employed for this second example of embodiment. Reference 12' denotes a chassis for holding the mechanisms, basically identical to those of the previous example of embodiment, as it can be seen from a comparison of Figs. 6 and 2.

Still in Fig. 6 reference 72 denotes a spring with an adjusting screw 73, secured on one side to support 74 and on the other side to sector 60. This spring always brings back the sector 60 to its rest position, with groove 61 (Fig. 4) down.

An analogous spring 75 with adjusting screw 76 is placed on the internal side of support 74 and acts as a return spring for the drawer, when the recovery button is pushed down at the end of the call.

A tongue 77, equipped with an adjustment screw 78 and a rubber buffer 79, is also provided to stop sector 60 in rest position.

Mechanical connection between sector and drawer is effected by means of a rod, secured to the sector and projecting towards the drawer, and of slot 80 (Fig. 5), wherein the rod is housed.

After inserting the card into slot 8', the user rotates the sector upwards, causing the drawer to rotate along the same angle. At the end the drawer is blocked by the mechanism, while the sector, free to rotate due to slot 8, is brought back by spring 72 to its rest position. What prevents mechanical operations to be effected onto the closed drawer to recover the card.

In fact, if the connection between sector and drawer were rigid, a force could be applied using groove 61 of the sector as a grip.

The card is led inside the drawer by guides placed in the circular sides and its ejection due to the action on connector 81 is prevented by means of a shaped plate 82, placed in correspondence whith slot 8'. In fact, in this case too, the connector of the card rubs against the connector of the telephone due to rotating movement, so as to prevent deposition of oxide or dirt on the contacts, which might cause the card to go out of the drawer.

Finally, reference 83 denotes a bulkhead integral with the drawer, which separates the part in which the slot is cut out from the part in which there is connector 81, still allowing the card passage. It prevents connector 81 from being damaged by unwanted objects which might be inserted in slot 8'.

The electrical diagram of the apparatus, particularly the electronic circuits designed to read and obliterate the cards, will be now described in details.

The circuit operation is based upon four operational phases which are cyclically repeated without any interruption, using suitable timing according to the controls and checks to be executed in each phase.

In the first phase the validity and security code of the cards are checked in dependence on the memorized data. In the second phase the contents in credit units are counted for each card, the two contents are added and the result, which may be converted into the corresponding money value, appears on a display which can be seen by the user.

In the third phase the first unwritten cell is looked for in the card with the least contents in credit units, and if the appropriate signal sent by the exchange has been received, in the identified cell a logic state is permanently written, what corresponds to the obliteration of one credit unit.

Finally in the fourth phase the contents of each card are read again and the result is compared with the result obtained in the second phase. If the difference corresponds to the value of the requested obliteration a signal of occurred obliteration is sent to the exchange. If the exchange translator does not receive this signal within a pre-determined time, the call is interrupted.

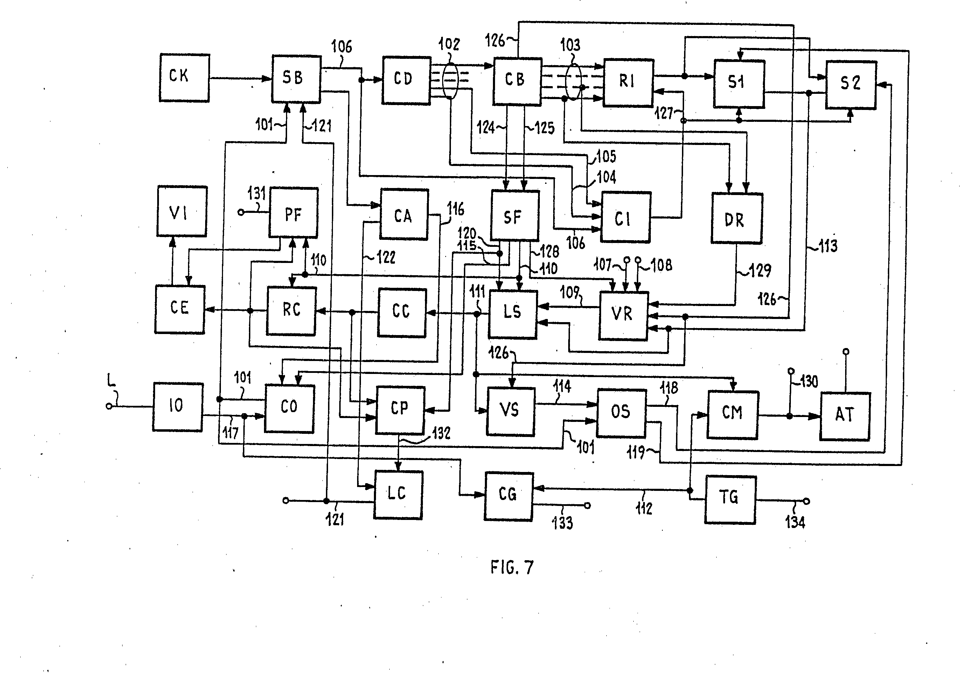

In the block diagram shown in Fig. 7 reference CK denotes a clock generator and SB denotes a logic circuit able to transfer to either output the clock signal present at the input, according to commands arriving on wires 101 and 121.

One of the SB outputs is connected to a sequential circuit CD, basically consisting of a four-bit counter and a BCD-to-decimal decoder, having at the output 16 wires denoted as a whole by 102. One of these wires access a divide-by-11 counter CB, 8 bits of which, present on 8 wires denoted as a whole by 103, are used for the address code of each card cell. The ninth bit, present on wire 126, is used to address the card on the right or that on the left, while the tenth and eleventh bits are used to scan the four operation phases.

Wires 103 access the inputs of a shift register RI, which effects the parallel-to-serial conversion of the 8 card-addressing bits. RI receives the clock signal via wire 127, coming from a logic circuit CI. This logic circuit, which is used for the generation of the clock signal for the cards and RI, is enabled to transfer to the output the signal supplied by SB on wire 106 by the signal present on wire 104, which is part of the 16 wires 102 outgoing from CD.

On the contrary, the signal present on wire 105, which still is part of wires 102, inhibits the transfer to the CI output of the clock signal present on wire 106, once the 8 bits of the address word have been emitted by RI.

SF denotes a BCD-to-decimal decoder, which, on the basis of the binary signals present on wires 124 and 125, supplies via wires 128, 110, 115, and 120 the signals for scanning the four operation phases.

References S1 and S2 denote the electronic cards, which, after they have been inserted in the slots and the card drawers have been closed, become a part of the electric circuit of the telephone.

From the operational point of view, the cards can be considered as EPROM (Erasable Programmable Read-Only Memory), whose erasion is inhibited; said cards are partly programmed by the manufactures and partly by the telephone during the obliteration phase. In particular, a row and a column are obliterated during the fabrication and an another row contains a security code, then the lead utilized for the operation is broken, by electrically fusing a suitable internal connection.

This pre-programming operation avoids any counterfeit or regeneration of the card used; in fact should one resort to radiations, the pre-programmed cells would be erased, and they could not be re--written in absence of the electrical connection.

Therefore, a check of the pre-programmed area is sufficient to verify the card validity and to avoid any fraudulent use.

Let us examine now the four phases of telephone operation describing for each of them the blocks involved.

In the first phase the card validity is checked: to this aim, preprogrammed cells are read and the security code written by the manufacturer is verified. A logic circuit VR checks the validity of the word contained in suitable rows of the memory matrices. It is enabled by the signal present on wire 128, relating to the first operation phase, by the signals on wires 107 and/or 108, relating to the state of the drawers and by a signal arriving from a row decoder DR.

Enable signals are present on wires 107 and/or 108 if the drawer on the right and/or that on the left are closed, because microswitches 24 (Fig. 3) have been operated by the drawers themselves. Circuit DR receives at the input two of wires 103, on which the card addresses sequentially appear, and, when the numbers of pre-programmed rows are present, it detects them by emitting at the output on wire 129 the relative pulse. In dependance on the state of the ninth bit present on wire 126, VR is also informed on which of the two memories S1 or S2 is being explored at that moment. When the signals relating to the memory contents arrive at the input via wire 113, it compares them with a pre-determined mask and, if the result is positive, emits on wire 109 a card validity signal.

The second operation phase is now started by the arrival of a signal on the wire 110 of SF and by the simultaneous disappearance of a signal on wire 128.

A logic circuit LS is enabled by signals present on wires 109 and 110 to transfer to its output the contents of memories, arriving on wire 113. Wire 111, connected to the LS output, accesses a credit counter CC, that supplies to a further credit register RC the countings of credit units still valid or of the credit. RC output is connected to a control circuit CE, apt to drive a digital display VI (denoted by 6 in Fig. 1), whereupon the user can read the contents in credit units of the inserted cards.

If there is at least one valid credit unit, a corresponding pulse appears on wire 111 which accesses a control circuit CM, in which it is stored. When also on wire 112, connected through a timer TG to the hook switch, a signal indicating that the hook is lifted is present, CM supplies at its output, connected to wire 130, a voltage causing energization of electromagnets 46 (Fig. 3) of the drawers cointaining valid cards. Consequently the drawers cannot be opened to the lowering of the hook or to the complete obliteration of the card contents.

The same signal supplied by CM is used by a circuit AT to enable the keyboard, in order to allow the called party's number to be dialled.

Reference VS denotes a logic comparator apt to perform a comparison between the values in credit units contained in the two cards. VS is informed by the signal present on wire 126 whether the card S1 or S2 is examined, while the card contents, present on wire 111, are alternatively sent to the up and down counting inputs of a counter contained in VS. Depending on whether the output passes through zero, card with minor contents is recognized and the corresponding signal is made available on wire 114.

When the contents of RC take up a certain minimum pre--determined value (such as three), a control circuit PF intervenes to signal the user to insert a new card: both a sound signal and an optical signal are emitted. PF is also enabled by the signal relating to the second phase, present on wire 110, and controls block CE with successive inhibitions, in order to cause a flashing of the display; moreover, through wire 131, PF causes the generation of a short sound in the receiver.

In the third phase determined by the appearance of a signal on the wire 115 arriving from SF, the obliterating operations are executed.

When the exchange translator sends an obliteration command on the telephone line, generating a suitable polarity inversion, an optical coupler IO transfers on wire 117 a corresponding signal of a level suited to a circuit CO, apt to control the obliteration and to effect the clock change. The concurrence of the obliteration command and of the signal on wire 115 enables CO, which sends a signal on wire 101 such that it causes SB switching. The clock signals generated by CK are not sent to CD but to counter CA instead.

The absence of signals towards CD stops the emission of addresses for the memory, which therefore remains addressed to the last cell.

Counter CA begins to count to the expiration of an interval of about 60 ms, time necessary to the card obliteration, then it sends via wire 116 an inhibiting signal to CO. As a consequence the signal on wire 101 changes its state and SB returns to its previous position, therefore the address emission can continue.

The signal present on wire 101 arrives also at a circuit OS for the control of the obliteration. Said circuit sends the obliteration signal to S1 or S2 respectively via wires 119 or 118, according to the state of the signal supplied by logic comparator VS on wire 114.

In the fourth phase, the signal present on wire 120 connected to decoder SB enables again logic circuit LS, therefore the contents of memories S1 and S2, are again transferred to credit counter CC, without being stored in register RC, which is not enabled by the signal on wire 110.

The signal present on wire 120 enables also a digital comparator CP, which effects the comparison between the number stored by RC in the second phase and the number counted by CC in this fourth phase, after the obliterating operations.

If CP finds out a difference between the two numbers, it emits a suitable signal on wire 132 towards a logic circuit LC, which through wire 121 causes the switching of logic circuit SB and the energization of a relay, not represented in the drawing, which interrupts the telephone line.

Said interruption is interpreted by the exchange translator as a confirmation of the occurred obliteration. Counter CA counts the signals coming from SB and after about 30 ms emits on wire 122 a signal inhibiting LC, restoring the continuity of the telephone line and switching again SB.

The signal of occurred obliteration is sent also to electromechanical counter 50 (Fig. 2), which cannot be seen by the user, for statistical purpose.

If there is no confirmation of occurred obliteration, the translator mantains the polarity inversion on the line and sends the busy tone. When the user replaces the handset on hook, the hook switch sends through TG and wire 112 a signal to a circuit CG for the control of "out of service", which, enabled at the same time by the exchange signal present on wire 117, causes red led 5 (Fig. 1) connected to wire 133 to flash.

Timer TG causes the signal coming from the hook switch through wire 134, when the handset is replaced on hook, to last for

- 15 -

about one second on wire 112, so that CM can keep the drawer electromagnets energized for the same time period.

That allows the exchanges with the obliteration at the call end to effect the card obliteration. In addition, when the handset is being lifted, TG prevents the occorrence of fraudulent line interruptions obtained with the hook, aimed at simulating a dialling.

Modifications and variations to the described example of embodiment are possible without going out of the scope of the invention.

Patent claims

1. Prepayment telephone operated by electronic card consisting of a programmable and partly pre-programmed read-only memory with a security code, which comprises a housing, a handset, a telephone hook with switch, a keyboard and an electronic circuit and which is characterized in that it further comprises in the front part of the housing (1) two manually-operated card-drawers (7,62), designed to be rotated into closed position and therein blocked by appropriate mechanical means, in order to establish a reliable electrical contact between the card (63) and the electronic circuit, that now can start four successive operation phases, effecting in the first the check of the security code, counting and displaying in the second the number of valid credit units and enabling the keyboard to dialling, effecting in the third the obliteration of the used credit units and checking in the fourth the obliteration occurred, while the card recovery can be effected during the call once the card has been completely obliterated or at the end of the call after a short time interval since the handset has been re-hooked, manually pressing a recovery push-button (10).

2. Telephone according to claim 1, characterized in that said recovery push-button (10) acts on a first lever (35) designed to rotate around a first pivot (36) in the same way as a second lever (22), with which it can be made integral by means of a second pivot (37) controlled by an electromagnet (46), said second lever acting upon a first tongue (21a) integral with the drawer to cause it to open and cooperating with a second tongue (21b) integral with the drawer to keep it closed, helped in that by a toggle spring (26) secured on one side to said second lever, and on the other side to a fixed point with respect to said first pivot.

3. Telephone according to claim 1, characterized in that each of said drawers is placed in closed position by manually operating a circular sector (60), mechanically coupled to a drawer in closing phase and subsequently free with a preferred rest position determined by a spring (72).

4. Telephone according to claim 1, characterized in that said drawers are equipped with a slot (8, 8') for the insertion of said cards, held inside by lateral guides and by an external plate (20, 82), and with an internal protecting device (17, 83) apt to prevent unwanted objects which may be inserted in that slot from damaging the internal devices of the telephone.

5. Telephone according to claim 1, characterized in that each drawer is equipped with a wire-cutter blade (65) designed to graze said slot (8, 8') in the closing phase of the drawer and to be pushed against the lateral surface of the drawer itself due to a lever (68) actuated by a prominence (71) integral with the drawer, in order to cut the wires that might be connected to said card (63).

6. Telephone according to claims 1 and 2, characterized in that, said electronic circuit comprises:

- a clock signal generator (CK);
- a first logic circuit (SB), able to transfer to a first and second outputs said clock signals, upon receiving a suitable switching signal;
- a first sequential circuit (CD), consisting of a first counter and of a first BCD-to-decimal decoder, able to count the signals coming from the first output of said first logic circuit (SB);
- a second counter (CB), able to count the pulses coming from one of the output wires of the decoder of said first sequential circuit (CD), in order to address said cards (S1, S2) to enable either card and to control said phases;
- a shift register (RI), apt to convert from parallel to serial part of the signals supplied by said second counter (CB), to constitute the address of said cards;

- a second logic circuit (CI), apt to supply the clock signals it receives from the first output of said first logic circuit (SB) to said shift register (RI) and to said cards, in function of the signals arriving from said first sequential circuit (CD);

- a second BCD-to-decimal decoder (SF), which utilizes the signals supplied by said second counter (CB) to generate the scanning signals of the phases on four output wires (128, 110, 115, 120);

- a third decoder (DR), apt to supply a signal identifying a memory area of the cards on the basis of the signals received from said second counter (CB);

- a third logic circuit (VR), apt to check the validity of a security code contained in said memory area, comparing it with a pre-determined code, in function of enable signals arriving on a first wire (128) from said second decoder (SF), from the one and/or the other microswitch (24) operated by the drawer, from said third decoder (DR) and from said second counter (CB), to identify either card;

- a third logic circuit (LS), apt to transfer at its output the pulses arriving from said cards, in function of enabling signals arriving on a second wire (110) from said second decoder (SF) and from said third logic circuit (VR);

- a third counter (CC), apt to count the pulses supplied by said third logic circuit (LS), correlated with the contents of said cards;

- a register (RC) apt to store the count supplied by said third counter (CC), in function of an enabling signal arriving on said second wire (110) from said second decoder (SF);

- a first control circuit (CE), apt to drive a digital display (VI) depending on the signals supplied by said register (RC);

- a second control circuit (CM), apt to drive said electromagnets (46), when enabled by the signals arriving from said third logic circuit (LS) and from a timer (TG), started by the hook switch;

- a third control circuit (AT), apt to enable the keyboard in presence of the signal supplied by said second control circuit (CM);

- a first logic comparator (VS), basically consisting of an up//down counter and able to identify the card with the smallest number of credit units, which receives from said third logic circuit (LS) the number of credit units contained in each card and compares them by emitting a suitable output signal;

- a fourth control circuit (PF), apt to detect at the output of said register (RC) a predetermined minimum number of credit units, and to emit acoustic and optical warning signals;

- an optical coupler (IO), apt to receive from the line the obliteration commands as polarity inversions and to transfer them at a suitable level to the electronic circuit;

- a fifth control circuit (CO), enabled by the signal present on a third wire (115) of said second decoder (SF), by the signal relating to the obliteration commands supplied by said optical coupler (IO) and by the signal supplied by a counter (CA) to generate a switching command for said first logic circuit (SB) and for a sixth control circuit (OS);

- a fourth counter (CA), arranged to count for a first and second predetermined time-periods the clock signals received from the second output of said first logic circuit (SB) and then to emit a first inhibiting signal for said fifth control circuit (CO) and a second enabling signal for a fourth logic circuit (LC) respectively;

- a sixth control circuit (OS), apt to effect the obliteration of said credit units by emitting a writing signal for either card (S1, S2), in function of the switching signal received from said fifth control circuit (CO) and of the output signal of said first logic comparator (VS);

- a second logic comparator (CP), enabled by the signal present on a fourth wire (120) of said second decoder (SF) to make the comparison between the input and output signals of said register (RC);

- a fourth logic circuit (LC), enabled by the signal emitted by said second logic comparator (CP) and inhibited by said second signal emitted by the fourth counter (CA) upon emission of a signal both for the energization of a relay apt to interrupt the telephone line and for the switching of said first logic circuit (SB);

- a fifth logic circuit (CG), apt to drive a warning light of "out of service" when said polarity inversion lasts on the telephone line after the handset has been re-hooked, further to the signal emitted by said timer (TG).

7. Telephone as in claim 6, characterized in that the contents of said cards (S1, S2) are represented as a number of credit units.

8. Telephone as in claim 6, characterized in that the contents of said cards (S1, S2) are represented as money value.

9. Electronic-card prepayment telephone basically as described in the text and depicted in the annexed drawings.

FIG. 1

FIG: 2

FIG.3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim |
|---|---|---|
| | <u>FR – A – 2 386 080</u> (CII–HONEY-WELL) <br><br> * page 2, line 25 to page 3, line 18; page 4, lines 34 to 40; page 5, lines 4 to 13; page 5, line 36 to page 6, line 2; page 8, line 5 to page 9, line 5 * <br><br> & US – A – 4 256 955 | 1,7 |
| | NACHRICHTENTECHNISCHE ZEITSCHRIFT, vol.30, no.6, June 1977 BERLIN (DE) H. ODEN:"Gedanken zum bargeldlosen Benutzen von Münzfernsprechern" pages 472/475 <br><br> * page 473, right-hand column, line 31 to page 474, left-hand column, line 25 * | 1,8 |
| | <u>FR – A – 2 330 292</u> (LANDIS) <br><br> * page 1, lines 1 to 15; page 2, lines 20 to 33 * <br><br> & GB – A – 1 516 029 | 1 |
| | <u>FR – A – 2 374 702</u> (SELENIA) <br><br> * page 2, line 13 to page 3; line 16; page 5, lines 20 to 28; page 6, lines 15 to 30 * <br><br> & GB – A – 1 556 328 <br><br> ./. | 1 |

**CLASSIFICATION OF THE APPLICATION (Int. Cl.³)**

H 04 M 17/02
G 07 F 7/02
G 06 K 7/06

**TECHNICAL FIELDS SEARCHED (Int. Cl.³)**

H 04 M 17/00
17/02
G 07 F 7/00
7/02
G 06 K 7/06
19/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 04-09-1981 | VANDEVENNE |

EPO Form 1503.1   06.78

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | CH - A - 572 299 (SODECO)<br><br>* column 1, lines 31 to 46; column 2, lines 8 to 35 *<br><br>- - - - - | 1 | |

TECHNICAL FIELDS
SEARCHED (Int. Cl.³)